# EUROPÄISCHE PATENTSCHRIFT

(11) **EP 3 642 695 B1**
(45) Veröffentlichungstag und Bekanntmachung des Hinweises auf die Patenterteilung: **31.07.2024**
(21) Anmeldenummer: 18731816.7
(22) Anmeldetag: 14.06.2018
(51) Int. Cl.: G06F 3/01

(54) **VERFAHREN ZUM BETREIBEN EINER ANZEIGEVORRICHTUNG FÜR EIN KRAFTFAHRZEUG SOWIE KRAFTFAHRZEUG**
METHOD FOR OPERATING A DISPLAY DEVICE, AND A MOTOR VEHICLE
PROCÉDÉ DE FONCTIONNEMENT D'UN DISPOSITIF D'AFFICHAGE AINSI QU'UN VÉHICULE AUTOMOBILE

(30) Priorität: 21.06.2017 DE 102017113763
(43) Veröffentlichungstag der Anmeldung: 29.04.2020
(73) Patentinhaber: SMR Patents S.à.r.l., 2453 Luxembourg (LU)
(72) Erfinder: GÖTTLICHER, Stefanie, 70327 Stuttgart (DE); ROETZER, Ilka, 95478 Kemnath (DE); WIECZOREK, Romeo, 70327 Stuttgart (DE)
(74) Vertreter: Weber-Bruls, Dorothée
(86) Internationale Anmeldenummer: PCT/EP2018/065796
(87) Internationale Veröffentlichungsnummer: WO 2018/234147

(56) Entgegenhaltungen:
- DE-A1- 102015 122 489
- US-A1- 2013 207 962
- US-A1- 2017 090 566

## Beschreibung

Die Erfindung betrifft ein Verfahren zum Betreiben einer Anzeigevorrichtung, für ein Kraftfahrzeug, sowie ein Kraftfahrzeug mit einer Steuereinrichtung, welche zum Ausführen eines derartigen Verfahrens ausgelegt ist.

In modernen Kraftfahrzeugen wird eine zunehmende Anzahl elektronischer (digitaler) Anzeigeflächen verbaut, die zum einen die klassische analoge Instrumentierung des Kraftfahrzeugs ersetzen sollen, und zum anderen zusätzliche Informationen, wie beispielweise Kartenansichten, Bedienoberflächen für Unterhaltungs- und Telekommunikationssysteme und dergleichen bereitstellen können.

Es hat sich dabei herausgestellt, dass die Bedienung solcher Anzeigeflächen durch klassische Eingabegeräte, wie beispielsweise Tasten, Joysticks, Touchpads oder dergleichen, sehr komplex ist und daher einerseits zu Fehleingaben seitens des Fahrers führen kann und andererseits ein hohes Ablenkungsrisiko für den Fahrer mit sich bringt.

Aus diesem Grunde ist es wünschenswert, möglichst einfache berührungsfreie Eingabemethoden bereitzustellen. So ist beispielsweise aus der US 9 244 527 B2 eine Bedienvorrichtung für eine blickrichtungsabhängige Gestensteuerung bekannt. Die Blickrichtung des Benutzers wählt dabei ein Zielgerät oder eine Funktion aus, welche von einer folgenden Gesteneingabe betroffen sein soll.

Es hat sich j edoch herausgestellt, dass auch die reine Gesteneingabe vielfach zu Fehlbedienungen führen kann. Insbesondere kann es vorkommen, dass fälschlicherweise zufällige Gesten, die an sich nicht als Bedieneingaben gedacht sind, als solche erkannt werden, sodass der Inhalt von Anzeigeflächen ungewollt durch den Fahrer des Kraftfahrzeugs verändert wird. Auch benötigen gestenbasierte Eingabesysteme oftmals eine Vielzahl von unterschiedlichen Gesten, die für den Benutzer oft schwer in Erinnerung zu behalten sind. Auch dies kann zu Fehleingaben und zu Ablenkung führen.

Die US 2017/090566 A1 offenbart ein System zur Unterstützung eines Benutzers bei der Interaktion mit einer grafischen Benutzeroberfläche, das blickbasierte Eingaben mit gestenbasierten Benutzerbefehlen kombiniert. Ein Benutzer eines Computersystems ohne traditionellen Berührungsbildschirm kann mit graphischen Benutzeroberflächen auf berührungsbildschirmähnliche Weise interagieren, indem er eine Kombination aus blickrichtungsbasierter Eingabe und gestenbasierten Benutzerbefehlen verwendet. Eine Lösung für eine Touch-Screen-ähnliche Interaktion verwendet blick- und gestenbasierte Eingaben als Ergänzung oder Alternative zu Touch-Screen-Interaktionen mit einem Computergerät mit Touch-Screen. Kombinierte blick- und gestenbasierte Interaktion mit graphischen Benutzerschnittstellen kann verwendet werden, um in Computersystemen ohne traditionellen Touchscreen oder in Computersystemen mit einem ergonomisch ungünstig für den Benutzer angeordneten Touchscreen oder einem Touchscreen, der so angeordnet ist, dass es für den Benutzer bequemer ist, Gesten und Blicke für die Interaktion zu verwenden, als den Touchscreen, eine Touchscreen ähnliche Umgebung zu erreichen.

Aus der DE 10 2015 122 489 A1 ist ein System zum Bereitstellen von sensorischem Feedback bekannt, bei dem eine Verfolgungsvorrichtung in einem Fahrzeug installiert ist, umfassend: ein Verfolgungsmodul, das dafür konfiguriert ist, eine Benutzerbewegung zu verfolgen, wobei die Benutzerbewegung unabhängig davon ist, ob der Benutzer physischen Kontakt mit einer Eingabeeinrichtung herstellt, die zum Steuern der Komponente des Fahrzeugs verwendet wird; und ein sensorisches Feedbackmodul, das dafür konfiguriert ist, sensorisches Feedback in Reaktion darauf bereitzustellen, dass das Verfolgungsmodul die Interaktion des Benutzers mit einer Komponente des Fahrzeugs verfolgt.

Ferner beschreibt die US 2013/207962 A1 Systeme, Methoden und nicht vorübergehende computerlesbare Speichermedien zur Darstellung dreidimensionaler Bilder für einen Benutzer. Die Methode erkennt eine Benutzergeste, wandelt die Benutzergeste in Bewegungsdaten um und präsentiert ein dreidimensionales Bild, das ein Objekt oder eine Szene in einer bestimmten Ansicht zeigt, wobei die bestimmte Ansicht auf den Bewegungsdaten basiert, die aus der Benutzergeste abgeleitet wurden.

Es ist somit die Aufgabe der vorliegenden Erfindung, ein Verfahren sowie ein Kraftfahrzeug der eingangs genannten Art bereitzustellen, mittels welchen die Bedienung von Anzeigeflächen im Kraftfahrzeug erleichtert werden.

Diese Aufgabe wird durch ein Verfahren mit den Merkmalen des Patentanspruchs 1 sowie ein Kraftfahrzeug mit den Merkmalen des Patentanspruchs 14 gelöst. Bevorzugte erfindungsgemäße Verfahren sind in den Ansprüchen 2 bis 13 beschrieben.

Es wird also ein Verfahren zum Betreiben einer Anzeigevorrichtung für ein Kraftfahrzeug, welches eine Mehrzahl von Anzeigeflächen umfasst, wobei eine Vielzahl von berührungslosen Eingabehandlungen bereitgestellt wird, geliefert, bei dem zum Auswählen zumindest eines Anzeigeelements auf einer ersten Anzeigefläche eine erste berührungslose Eingabehandlung eines Benutzers erfasst und die erste berührungslose Eingabehandlung durch eine zweiten berührungslosen Eingabehandlung des Benutzers verifiziert wird; und zum zumindest einmaligen Verschieben des zumindest einen ausgewählten Anzeigeelements von der ersten Anzeigefläche innerhalb der ersten Anzeigefläche oder auf eine zweite Anzeigefläche zumindest eine dritte berührungslose Eingabehandlung des Benutzers erfasst wird, wobei zum Erfassen der ersten berührungslosen Eingabehandlung zumindest eine Augenhaltung des Benutzers mit einer ersten Kamera erfasst wird, und zum Verifizieren als die zweite berührungslose Eingabehandlung zumindest eine für den Rumpf des Benutzers charakteristische Größe mit einer zweiten Kamera erfasst wird, oder zum Erfassen der ersten berührungslosen Eingabehandlung zumindest eine für den Rumpf des Benutzers charakteristische Größe mit der zweiten Kamera erfasst wird, und zum Verifizieren als die zweite berührungslosen Eingabehandlung zumindest die Augenhaltung des Benutzers mit der ersten Kamera erfasst wird, und zum Erfassen der dritten berührungslosen Eingabehandlung zumindest eine für die Hand, den oder die Finger und/oder den Mund des Benutzers charakteristische Verfahren nach Größe mittels einer dritten Kamera zur Erfassung von Gesten erfasst wird.

Durch die Verifizierung der ersten berührungslosen Eingabehandlung durch die zweite berührungslose Eingabehandlung kann sichergestellt werden, dass ungewollte Fehleingaben durch den Benutzer reduziert oder ganz vermieden werden. Damit wird ein besonders zuverlässiges Verfahren zum Betreiben einer Anzeigevorrichtung geschaffen.

Gemäß der Erfindung wird eine Vielzahl von berührungslosen Eingabehandlungen bereitgestellt, wobei sich die erste, zweite und dritte berührungslose Eingabehandlung voneinander unterscheiden und/oder von dem Benutzer ausgewählt und/oder geändert werden können.

Bevorzugt ist dabei, dass die berührungslosen Eingabehandlungen bestimmt werden durch
eine für die Augenhaltung des Benutzers eine Irisposition oder eine Pupillenposition, oder
eine für den Rumpf des Benutzers charakteristische Größe, insbesondere umfassend eine Körperhaltung, eine Körperposition, eine Körperorientierung, eine Schulterposition und/oder eine Schulterorientierung des Benutzers, oder
eine für eine Hand und/oder zumindest einen Finger des Benutzers charakteristische Geste, wie ein Vorbeistreichen, Annähern, Wegbewegen, Finger-Spreizen, Finger-Krümmen, Finger-Berühren und/oder Faust-Bilden, und/oder eine Finger- und/oder Hand-Position und/oder Finger-und/oder Handorientierung, oder
eine für den Mund des Benutzers charakteristische Geste umfassend eine Lippenbewegung.

Zum Erfassen der ersten berührungslosen Eingabehandlung kann zumindest eine für den Kopf des Benutzers charakteristische Größe erfasst werden, und zum Verifizieren kann als die zweite berührungslose Eingabehandlung zumindest eine für den Rumpf des Benutzers charakteristische Größe erfasst werden, oder vice versa. Zum Erfassen der dritten berührungslosen Eingabehandlung kann zumindest eine für die Hand, den oder die Finger und/oder den Mund des Benutzers charakteristische Größe erfasst werden.

Eine blickrichtungsabhängige Auswahl des zumindest einen Anzeigeelements auf der ersten Anzeigefläche erfordert ein Minimum an Aktivität des Benutzers und ist somit besonders komfortabel.

Die Gestensteuerung dient gemäß der Erfindung vornehmlich zur Durchführung einer vorbestimmten Aktion, nämlich einem Verschieben. Damit wird es ermöglicht, mit wenigen, besonders einfachen Gesten auszukommen, die für den Benutzer leicht in Erinnerung zu behalten sind. Auch kann einfach durch eine Mehrfachgestik, beispielsweise durch mehrmalige Wischbewegungen der Hand, ein Verschieben über mehrere Anzeigeelemente erfolgen.

Die Verifikation der ersten Eingabehandlung, bevorzugt der Blickrichtung des Benutzers, durch dessen Körperposition bzw. Körperorientierung als zweite Eingabehandlung kann sicherstellen, dass zufällige Augenbewegungen (beispielsweise ein schneller Seitenblick zum Beifahrer) nicht bereits als Eingabehandlung gewertet werden. Dies verbessert die Zuverlässigkeit der Bedienung der Anzeigevorrichtung.

Bei einer weiteren bevorzugten Ausführungsform der Erfindung wird zum Erfassen der ersten und/oder zweiten und/oder dritten berührungslosen Eingabehandlung zumindest eine Tiefenbildkamera, insbesondere eine Time-of-flight-Kamera, verwendet. Solche Tiefenbildkameras liefern zu jedem Bildpunkt neben Helligkeits- und/oder Farbinformationen auch eine Tiefeninformation, also eine Entfernung des dem jeweiligen Bildpunkt zugeordneten Objekts von der Kamera. Bei Time-of-flight-Kameras wird dies durch Messung der Lichtlaufzeit zwischen einer Lichtquelle, dem Objekt und der Kamera erzielt. Selbstverständlich können auch andere Formen von Tiefenbildkameras, wie beispielsweise stereoskopische Kameras, interferometrische Kameras, Triangulationssysteme oder Lichtfeldkameras verwendet werden.

Durch die Einbeziehung der Tiefen- bzw. Entfernungsinformation in das auszuwertende Kamerabild können sowohl Gesten des Benutzers als auch dessen Körper- und Kopfposition bzw. Körper- und Kopforientierung besonders zuverlässig erfasst werden.

Es ist weiter bevorzugt, wenn als Anzeigeflächen Monitore und/oder Projektionsflächen und/oder Head-Up-Displays und/oder flexible OLED-Displays und/oder Flüssigkristalldisplays und/oder lichttechnische Gewebe und/oder lichttechnische Folie verwendet werden. Hierdurch kann die Anzeigevorrichtung problemlos an das Innendesign eines Kraftfahrzeugs angepasst und nahtlos in dieses integriert werden. Gleichzeitig ist es so möglich, einzelne Anzeigeflächen spezifisch an die Bedürfnisse eines Fahrers oder Insassen des Kraftfahrzeugs anzupassen.

Es ist weiter bevorzugt, wenn Anzeigeflächen verwendet werden, die in einem Armaturenbrett und/oder auf einer Windschutzscheibe und/oder in einem Dachhimmel und/oder in einer Mittelkonsole und/oder in einem weiteren Innenverkleidungsteil des Kraftfahrzeugs angeordnet sind. So kann beispielsweise sichergestellt werden, dass für jede mögliche Blickrichtung oder Orientierung des Fahrers eine Anzeigefläche in dessen Blickfeld vorliegt, sodass ihm jederzeit alle notwendigen Informationen übermittelt werden können.

Bei einer weiteren bevorzugten Ausführungsform der Erfindung ist das zumindest eine Anzeigeelement ein Icon und/oder ein Menüeintrag und/oder ein Gesamtinhalt der ersten Anzeigefläche und/oder ein ausgewählter Teilbereich der ersten Anzeigefläche. Hierdurch werden auf Grundlage des gleichen Bedienverfahrens eine Vielzahl unterschiedlicher Bedienhandlungen ermöglicht, ohne dass sich der Benutzer hierfür jeweils spezifische Gesten merken muss. Dies erleichtert die Bedienung der Anzeigevorrichtung.

Es ist zudem bevorzugt, wenn als weitere berührungslose Eingabehandlung eine Gehirnaktivität des Benutzers und/oder eine Spracheingabe des Benutzers erfasst werden. Dies kann sowohl zu einer weiteren Verifikation der bereits beschriebenen Bedienhandlungen verwendet werden, als auch dazu dienen, die Bedienhandlungen zusätzlich zu modifizieren.

Bevorzugt ist gemäß der Erfindung, dass das zumindest eines Anzeigeelements auf der ersten Anzeigefläche ausgewählt wird, wenn die erste und zweite berührungslose Eingabehandlung innerhalb einer ersten Zeitspanne erfasst werden, und/oder das zumindest einen ausgewählte Anzeigeelements von der ersten Anzeigefläche innerhalb der ersten Anzeigefläche oder auf eine zweite Anzeigefläche verschoben wird, wenn die erste und/oder zweite berührungslose Eingabehandlung sowie die dritte berührungslose Eingabehandlung innerhalb einer zweiten Zeitspanne erfasst werden. Dies dient dem weiteren Reduzieren von Fehlbedienungen.

Mit der Erfindung wird ferner vorgeschlagen, dass das Verschieben rückgängig gemacht werden kann durch eine vierte berührungslose Eingabehandlung des Benutzers, die sich vorzugsweise von der ersten, zweiten und dritten berührungslosen Eingabehandlung des Benutzers unterscheidet, oder durch Betätigung einer Eingabeeinrichtung, insbesondere umfassen ein Touchpanel.

Beim Verschieben des zumindest einen Anzeigeelements kann dasselbe vergrößert werden und/oder eine Zusatzinformation zu dem zumindest einen Anzeigeelement angezeigt werden und/oder in ein Untermenü zu dem zumindest einen Anzeigeelement gewechselt werden. Als Alternative kann beim Verschieben des zumindest einen Anzeigeelements dasselbe verkleinert werden und/oder weniger Information zu dem zumindest einen Anzeigeelement angezeigt werden und/oder das zumindest einen Anzeigeelement aus der Blickrichtung des Benutzers und/oder in einen Hintergrund gelangen. Dies ermöglicht ein Blättern oder Scrollen zwischen Menüebenen, selbst in einer Menü-Hierarchie. Über ein Hauptmenü läßt sich so bspw. eine Navi-Information als Untermenü an einer ausgewählten Stelle im Kraftfahrzeug anzeigen. Ebenso ist es möglich, nicht benötigte Anzeigen bspw. zu einem Telefonbuch während eines Navigierens in einen Hintergrund zu schieben, wo es den Benutzer nicht stört.

Die Erfindung betrifft ferner ein Kraftfahrzeug mit einer Anzeigevorrichtung mit einer Mehrzahl von Anzeigeflächen, drei unterschiedliche Kameras zur Erfassung von ersten, zweiten und dritten berührungslosen Eingabehandlungen und einer Steuereinrichtung, welche zum Durchführen eines Verfahrens der beschriebenen Art ausgebildet ist.

Nachfolgend werden bevorzugte Ausführungsformen der vorliegenden Erfindung unter Bezug auf die Zeichnungen beispielhaft näher erläutert, in denen
- Fig. 1: eine schematische Darstellung eines Kraftfahrzeugs zeigt, welches zur Durchführung eines Ausführungsbeispiels des erfindungsgemäßen Verfahrens ausgebildet ist;
- Fig. 2: eine schematische Darstellung der Erfassung von berührungslosen Bedienhandlungen im Rahmen eines Ausführungsbeispiels des erfindungsgemäßen Verfahrens darstellt;
- Fig. 3: eine schematische Darstellung des Durchführens einer Bedienhandlung im Rahmen eines Ausführungsbeispiels des erfindungsgemäßen Verfahrens darstellt; und
- Fig. 4: eine weitere schematische Darstellung der Durchführung einer Bedienhandlung im Rahmen eines weiteren Ausführungsbeispiels des erfindungsgemäßen Verfahrens zeigt.

Ein im Ganzen mit 10 bezeichneter Kraftfahrzeug umfasst eine erste Kamera 12, die in einem Armaturenbrett 14 angeordnet ist, sowie eine zweite Kamera 16, die am Übergang zwischen einer Windschutzscheibe 18 und dem Dach 20 des Kraftfahrzeugs 10 eingebaut ist. Die Kamera 16 kann dabei beispielsweise auch in einen Innenrückspiegel des Kraftfahrzeugs 10 integriert werden.

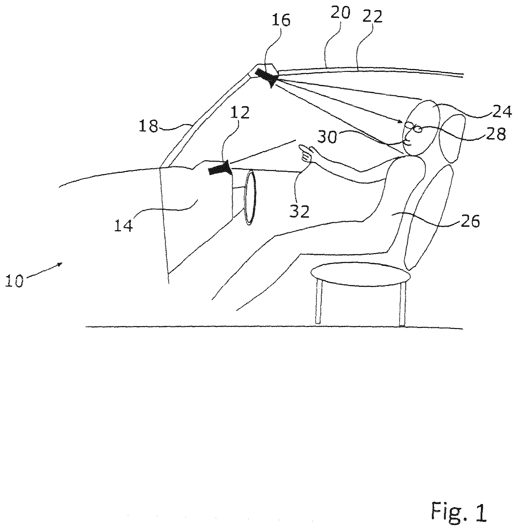

Ferner umfasst der Kraftfahrzeug 10 eine Mehrzahl von in Fig. 1 nicht dargestellten Anzeigevorrichtungen, die beispielsweise im Armaturenbrett 14 integriert sein können, als Head-Up-Display auf der Windschutzscheibe 18 ausgeführt sein können oder in einem Dachhimmel 22 oder anderen Innenverkleidungsteilen des Kraftfahrzeugs 10 verbaut sein können.

Um eine berührungslose Steuerung der Anzeigevorrichtungen zu ermöglichen, wird mit der Kamera 16 z.B. die Position eines Kopfes 24 eines Fahrzeuginsassen 26, im gezeigten Beispiel des Fahrers des Kraftfahrzeugs 10, beobachtet. Die Kamera 16 erfasst dabei beispielsweise sowohl die Augen 28 des Fahrzeuginsassen 26 als auch seinen gesamten Kopf 24. Die Überwachung der Position der Augen 28 kann durch Bilderkennung der Augen 28 als Ganzes erfolgen. Es kann jedoch auch eine feinere Analyse durchgeführt werden, bei der die Position von Pupillen oder Iris der Augen 28 beobachtet wird. Zur Bestimmung der Position und Orientierung des Kopfes 24 kann die Kamera 16 besonders leicht zu erkennende Teile des Kopfes, wie beispielsweise die Nase 30 des Fahrzeuginsassen 26, beobachten.

Die weitere Kamera 12 im Armaturenbrett 24 registriert ferner die Position und Bewegung einer Hand 32 des Fahrzeuginsassen 26.

Bei den Kameras 12, 16 handelt es sich bevorzugt um Tiefenbildkameras, besonders bevorzugt um sogenannte Time-of-flight-Kameras, die zu jedem Bildpunkt eine Entfernungsinformation mitliefern, sodass die Bilderkennung besonders präzise wird.

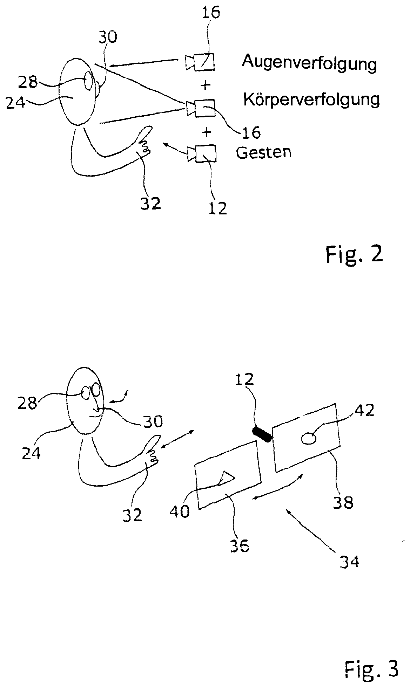

Die Kombination aus der Erfassung von Kopfposition, Augenposition und Gesten des Fahrzeuginsassen 26 ermöglicht, wie im Folgenden anhand der Figuren 2 bis 4 erläutert, eine besonders präzise berührungslose Steuerung der Anzeigevorrichtung des Kraftfahrzeugs 10.

Fig. 2 fasst nochmals zusammen, wie mittels dreier Kameras 12 und 16 sowohl Gesten als auch Körper- und Kopf- bzw. Augenhaltung des Fahrzeuginsassen 26 erfasst werden. Für das beschriebene Verfahren ist dabei die Erfassung aller genannten Parameter besonders vorteilhaft.

Fig. 3 zeigt, wie eine Anzeigevorrichtung 34 mit einer ersten Anzeigefläche 36 und einer zweiten Anzeigefläche 38 bedient werden kann. Auf der ersten Anzeigefläche 36 ist dabei ein erstes Anzeigeelement 40, beispielsweise ein Icon, angeordnet. Die zweite Anzeigefläche 38 zeigt ein zweites Anzeigeelement 42, bei dem es sich ebenfalls um ein Icon, einen Menüeintrag oder dergleichen handeln kann.

Will der Fahrzeuginsasse 26 nun eine Bedienhandlung ausführen, so richtet er beispielsweise zunächst seinen Blick auf eine der beiden Anzeigeflächen 36, 38, die das Ziel seiner Bedienhandlung sein soll. So kann er beispielsweise auf die Anzeigefläche 36 schauen, und die Blickrichtung wird über seine Augenposition mit einer ersten Kamera 16 erfasst. Gleichzeitig wird überprüft, ob die Körperhaltung des Fahrzeuginsassen 26 mit seiner Blickrichtung übereinstimmt, um die Erkennung der auszuwählenden Anzeigefläche 36 zu verifizieren. Dazu erfasst eine zweite Kamera 16 die Körperorientierung. Führt der Fahrzeuginsasse 26 nun eine von der dritten Kamera 12 erfassbare Geste mit seiner Hand 32 aus, im gezeigten Beispiel eine seitliche Wischbewegung zwischen den Anzeigeflächen 36, 38, so wird das durch den Blick ausgewählte und durch die Körperorientierung verifizierte Anzeigeelement 40 von der ausgewählten Anzeigefläche 36 auf die andere Anzeigefläche 38 verschoben.

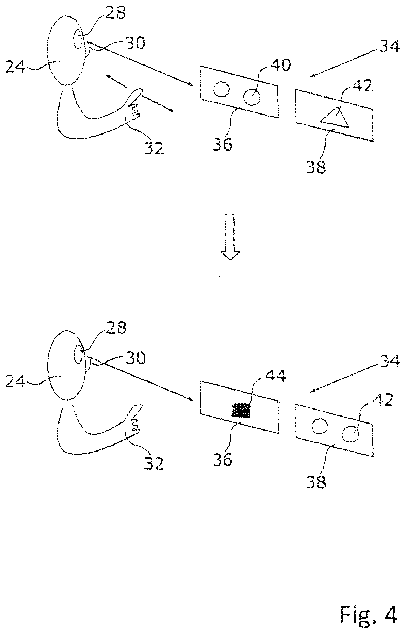

Fig. 4 zeigt dies nochmals im Detail. Hier wird der gesamte Inhalt der Anzeigefläche 36 auf die beschriebene Art auf die Anzeigefläche 38 verschoben, wodurch ein neues, vorbestimmtes Anzeigeelement 44 auf der nun freigewordenen Anzeigefläche 36 angezeigt wird. Ein Verschieben des gesamten Inhalts der Anzeigefläche 36 auf die Anzeigefläche 38 ist jedoch nicht notwendigerweise immer der Fall. Es ist auch möglich, dass auf die beschriebene Art lediglich ein Anzeigeelement 40, 42, 44 zwischen den Anzeigeflächen 36, 38 verschoben wird, oder dass weitere Aktionen bezüglich des ausgewählten Anzeigeelements 40, 42, 44 durchgeführt werden. Beispielsweise kann durch das Verschieben eines einzelnen Icons auf eine neue Anzeigefläche 36, 38 ein mit diesem Icon assoziiertes Programm in der neu ausgewählten Anzeigefläche 36, 38 aktiviert werden, oder auch ähnliche weitere Bedienfunktionen durchgeführt werden. Denkbar ist hier auch die Auswahl eines Menüeintrags, die Verstellung von Schiebereglern, wie beispielsweise für die Lautstärke eines Unterhaltungssystems, die Auswahl aus einer Liste, wie beispielsweise einer Liste von Telefonnummern für ein integriertes Telefon oder dergleichen.

Hierzu können auch noch weitere berührungslose Eingaben erfasst und ausgewertet werden. Denkbar ist beispielsweise eine zusätzliche Spracherkennung oder auch die Erkennung von Gehimaktivitäten des Benutzers im Sinne eines Gehirn-Maschine-Interface.

Die in der voranstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

| | |
|---|---|
| Kraftfahrzeug | 10 |
| Kamera | 12 |
| Armaturenbrett | 14 |
| Kamera | 16 |
| Windschutzscheibe | 18 |
| Dach | 20 |
| Dachhimmel | 22 |
| Kopf | 24 |
| Fahrzeuginsasse | 26 |
| Auge | 28 |
| Nase | 30 |
| Hand | 32 |
| Anzeigevorrichtung | 34 |
| Anzeigefläche | 36 |
| Anzeigefläche | 38 |
| Anzeigeelement | 40 |
| Anzeigeelement | 42 |
| Anzeigeelement | 44 |

## Patentansprüche

1. Verfahren zum Betreiben einer Anzeigevorrichtung (34) für ein Kraftfahrzeug (10), welches eine Mehrzahl von Anzeigeflächen (36, 38) umfasst, wobei eine Vielzahl von berührungslosen Eingabehandlungen bereitgestellt wird, bei dem
- zum Auswählen zumindest eines Anzeigeelements (40) auf einer ersten Anzeigefläche (36) eine erste berührungslose Eingabehandlung eines Benutzers (26) erfasst und die erste berührungslose Eingabehandlung durch eine zweite berührungslose Eingabehandlung des Benutzers (26) verifiziert wird; und
- zum zumindest einmaligen Verschieben des zumindest einen ausgewählten Anzeigeelements (40) von der ersten Anzeigefläche (36) innerhalb der ersten Anzeigefläche (36) oder auf eine zweite Anzeigefläche (38) zumindest eine dritte berührungslose Eingabehandlung des Benutzers (26) erfasst wird,
wobei zum Erfassen der ersten berührungslosen Eingabehandlung zumindest eine Augenhaltung des Benutzers (26) mit einer ersten Kamera (16) erfasst wird, und zum Verifizieren als die zweite berührungslose Eingabehandlung zumindest eine für den Rumpf des Benutzers (26) charakteristische Größe mit einer zweiten Kamera (16) erfasst wird, oder zum Erfassen der ersten berührungslosen Eingabehandlung zumindest eine für den Rumpf des Benutzers (26) charakteristische Größe mit der zweiten Kamera (16) erfasst wird, und zum Verifizieren als die zweite berührungslosen Eingabehandlung zumindest die Augenhaltung des Benutzers (26) mit der ersten Kamera (16) erfasst wird,
und
zum Erfassen der dritten berührungslosen Eingabehandlung zumindest eine für die Hand (32), den oder die Finger und/oder den Mund des Benutzers (26) charakteristische Verfahren nach Größe mittels einer dritten Kamera (12) zur Erfassung von Gesten erfasst wird.

2. Verfahren nach Anspruch 1,
wobei die sich unterscheidenden ersten, zweiten und dritten berührungslose Eingabehandlungen von dem Benutzer (26) ausgewählt und/oder geändert werden können.

3. Verfahren nach Anspruch 2, bei welchem
die für die Augenhaltung des Benutzers (26) charakteristische Größe eine Irisposition oder eine Pupillenposition, , oder
die für den Rumpf des Benutzers (26) charakteristische Größe eine Körperhaltung, eine Körperposition, eine Körperorientierung, eine Schulterposition und/oder eine Schulterorientierung des Benutzers (26), oder
die für eine Hand (32) und/oder zumindest einen Finger des Benutzers (26) charakteristische Geste, wie ein Vorbei streichen, Annähern, Wegbewegen, Finger-Spreizen, Finger-Krümmen, Finger-Berühren und/oder Faust-Bilden, und/oder eine Finger- und/oder Hand (32)-Position und/oder Finger- und/oder Hand (32)-Orientierung, oder
die für den Mund des Benutzers (26) charakteristische Geste eine Lippenbewegung umfasst.

4. Verfahren nach Anspruch 3, bei welchem
die für den Rumpf des Benutzers (26) charakteristische Größe die Körperorientierung ist, und
die für die Hand (32) des Benutzers charakteristische Größe die Geste ist.

5. Verfahren nach einem der vorhergehenden Ansprüche, bei welchem
zum Erfassen der ersten, zweiten und/oder dritten berührungslosen Eingabehandlung zumindest eine Tiefenbildkamera (12, 16), insbesondere eine time-of-flight-Kamera, verwendet wird.

6. Verfahren nach einem der vorhergehenden Ansprüche, bei welchem
als Anzeigeflächen (36, 38) Monitore und/oder Projektionsflächen und/oder Head-Up-Displays und/oder flexible OLED-Displays und/oder Flüssigkristalldisplays und/oder lichttechnische Gewebe und/oder lichttechnische Folien verwendet werden.

7. Verfahren nach einem der vorhergehenden Ansprüche, bei welchem Anzeigeflächen (36, 38) verwendet werden, die in einem Armaturenbrett (14) und/oder auf einer Windschutzscheibe (18) und/oder in einem Dachhimmel (22) und/oder in einer Mittelkonsole und/oder in einem weiteren Innenverkleidungsteil des Kraftfahrzeugs (10) angeordnet sind.

8. Verfahren nach einem der vorhergehenden Ansprüche, bei welchem
das zumindest eine Anzeigeelement (40, 42, 44) ein Icon und/oder ein Menüeintrag und/oder ein Gesamtinhalt der ersten Anzeigefläche (36) und/oder ein ausgewählter Teilbereich der ersten Anzeigefläche (36) ist.

9. Verfahren nach einem der vorhergehenden Ansprüche, bei welchem
als weitere berührungslose Eingabehandlung eine Gehirnaktivität des Benutzers (26) erfasst wird.

10. Verfahren nach einem der vorhergehenden Ansprüche, bei welchem
das zumindest eines Anzeigeelements (40) auf der ersten Anzeigefläche (36) ausgewählt wird, wenn die erste und zweite berührungslose Eingabehandlung innerhalb einer ersten Zeitspanne erfasst werden, und/oder
das zumindest einen ausgewählte Anzeigeelements (40) von der ersten Anzeigefläche (36) innerhalb der ersten Anzeigefläche (36) oder auf eine zweite Anzeigefläche (38) verschoben wird, wenn die erste und/oder zweite berührungslose Eingabehandlung sowie die dritte berührungslose Eingabehandlung innerhalb einer zweiten Zeitspanne erfasst werden.

11. Verfahren nach einem der vorhergehenden Ansprüche, bei welchem
das Verschieben rückgängig gemacht wird durch eine vierte berührungslose Eingabehandlung des Benutzers (26), die sich vorzugsweise von der ersten, zweiten und dritten berührungslose Eingabehandlung des Benutzers (26) unterscheidet, oder durch Betätigung einer Eingabeeinrichtung, insbesondere umfassen ein Touchpanel.

12. Verfahren nach einem der vorhergehenden Ansprüche, bei welchem
beim Verschieben des zumindest einen Anzeigeelements (40) dasselbe vergrößert wird und/oder eine Zusatzinformation zu dem zumindest einen Anzeigeelement (40) angezeigt wird und/oder in ein Untermenü zu dem zumindest einen Anzeigeelement (40) gewechselt wird.

13. Verfahren nach einem der Ansprüche 1 bis 11, bei welchem
beim Verschieben des zumindest einen Anzeigeelements (40) dasselbe verkleinert wird und/oder weniger Information zu dem zumindest einen Anzeigeelement (40) angezeigt wird und/oder das zumindest einen Anzeigeelement (40) aus der Blickrichtung des Benutzers (26) und/oder in einen Hintergrund gelangt.

14. Kraftfahrzeug (10) mit einer Anzeigevorrichtung (34) mit einer Mehrzahl von Anzeigeflächen (36, 38), drei unterschiedliche Kameras zur Erfassung von ersten, zweiten und dritten berührungslosen Eingabehandlungen und einer Steuereinrichtung, welche zum Durchführen eines Verfahrens nach einem der vorhergehenden Ansprüche ausgebildet ist.

## Claims

1. A method for operating a display apparatus (34) for a motor vehicle (10) comprising a plurality of a display surfaces (36, 38), wherein a plurality of non-contact inputs actions are provided, in which
- in order to select at least one display element (40) on a first display surface (36), a first non-contact input action of a user (26) is detected, and the first non-contact input action is verified by a second non-contact input action of the user (26); and
- in order to move, at least once, the at least one selected display element (40) of the first display surface (36) within the first display surface (36) or onto a second display surface (38), at least one third non-contact input action of the user (26) is detected,
wherein, in order to detect the first non-contact input action, at least one eye position of the user (26) is detected by a first camera (16), and for verification a variable that is characteristic of the torso of the user (26) is detected by a second camera (16) as the second non-contact input action, or in order to detect the first non-contact input action, at least one variable that is characteristic of the torso of the user (26) is detected by the second camera (16), and for verification at least the eye position of the user (26) is detected by the first camera (16) as the second non-contact input action,
and
in order to detect the third touch-sensitive input action, at least one variable that is characteristic of the hand (32), the finger(s) and/or the mouth of the user (26) is detected by a third camera (12) for detecting gestures.

2. The method according to Claim 1,
wherein the different first, second and third non-contact input actions can be selected and/or changed by the user (26).

3. The method according to Claim 2, in which
the variable that is characteristic of the eye position of the user (26) includes an iris position or a pupil position, or
the variable that is characteristic of the torso of the user (26) includes a body posture, a body position, a body orientation, a shoulder position and/or a shoulder orientation of the user (26), or
the gesture that is characteristic of a hand (32) and/or at least one finger of the user (26), such as a swipe, an approaching motion, a distancing motion, splaying of fingers, bending of fingers, touching of fingers and/or making a fist, and/or a finger and/or hand (32) position, and/or a finger or hand (32) orientation, or
the gesture that is characteristic of the mouth of the user (26) includes a lip movement.

4. The method according to Claim 3, in which
the variable that is characteristic of the torso of the user (26) includes body orientation, and
the variable that is characteristic of the hand (32) of the user is the gesture.

5. The method according to any one of the preceding claims, in which
in order to detect the first, second and/or third non-contact input action, at least one depth-image camera (12, 16), in particular a time-of-flight camera, is used.

6. The method according to any one of the preceding claims, in which
monitors and/or projection surfaces and/or head-up displays and/or flexible OLED displays and/or liquid-crystal displays and/or photometric fabrics are used as display surfaces (36, 38).

7. The method according to any one of the preceding claims, in which
display surfaces (36, 38) are used which are arranged in an instrument panel (14) and/or on a windshield (18) and/or in a headliner (22) and/or in a center console and in a further interior trim of the motor vehicle (10).

8. The method according to any one of the preceding claims, in which
the at least one display element (40, 42, 44) is an icon and/or a menu item and/or overall content of the first display surface (36) and/or a selected region of the first display surface (36).

9. The method according to any one of the preceding claims, in which
brain activity of the user (26) is detected as a further non-contact input action.

10. The method according to any one of the preceding claims, in which
the at least one display element (40) on the first display surface (36) is selected if the first and second non-contact input actions are detected within a first time frame, and/or the at least one selected display element (40) of the first display surface (36) is moved within the first display surface (36) or onto a second display surface (38) if the first and/or second non-contact input action and the third non-contact input action are detected within a second time frame.

11. The method according to any one of the preceding claims, in which
the movement is reversed by a fourth non-contact input action of the user (26) that is different from the first, second and third non-contact input actions of the user (26), or by actuation of an input device, in particular comprising a touch panel.

12. The method according to any one of the preceding claims, in which
when the at least one display element (40) is moved, said at least one display element (40) is enlarged, and/or additional information about the at least one display element (40) is displayed, and/or a switch is made to a submenu for the at least one display element (40).

13. The method according to any one of Claims 1 to 11, in which
when the at least one display element (40) is moved, said at least one display element (40) is made smaller, and/or less information about the at least one display element (40) is displayed, and/or the at least one display element (40) moves out of the line of sight of the user (26) and/or into a background.

14. A motor vehicle (10) comprising a display apparatus (34) having a plurality of display surfaces (36, 38), three different cameras for detecting first, second and third non-contact input actions, and a control device which is configured to carry out a method according to any one of the preceding claims.

## Revendications

1. Procédé d'exploitation d'un dispositif d'affichage (34) pour un véhicule automobile (10), qui comprend une pluralité de surfaces d'affichage (36, 38), une pluralité de traitements d'entrée sans contact étant fournie, dans lequel
- pour sélectionner au moins un élément d'affichage (40) sur une première surface d'affichage (36), un premier traitement d'entrée sans contact d'un utilisateur (26) est détecté et le premier traitement d'entrée sans contact est vérifié par un deuxième traitement d'entrée sans contact de l'utilisateur (26) ; et
- pour déplacer au moins une fois l'au moins un élément d'affichage sélectionné (40) de la première surface d'affichage (36) à l'intérieur de la première surface d'affichage (36) ou sur une deuxième surface d'affichage (38), au moins un troisième traitement d'entrée sans contact de l'utilisateur (26) est détecté,
où, pour détecter le premier traitement d'entrée sans contact, au moins une position des yeux de l'utilisateur (26) est détectée avec une première caméra (16), et pour vérifier, en tant que deuxième traitement d'entrée sans contact, au moins une grandeur caractéristique du torse de l'utilisateur (26) est détectée avec une deuxième caméra (16), ou pour détecter le premier traitement d'entrée sans contact, au moins une grandeur caractéristique du torse de l'utilisateur (26) est détectée avec la deuxième caméra (16), et pour vérifier, en tant que deuxième traitement d'entrée sans contact, au moins la position des yeux de l'utilisateur (26) est détectée avec la première caméra (16),
et
pour détecter le troisième traitement d'entrée sans contact, au moins une grandeur caractéristique de la main (32), du ou des doigts et/ou de la bouche de l'utilisateur (26) est détecté selon la taille au moyen d'une troisième caméra (12) pour détecter des gestes.

2. Procédé selon la revendication 1,
où les premier, deuxième et troisième traitements d'entrée sans contact distincts peuvent être sélectionnés et/ou modifiés par l'utilisateur (26).

3. Procédé selon la revendication 2, dans lequel
la grandeur caractéristique de la position des yeux de l'utilisateur (26) est une position de l'iris ou une position de la pupille, ou
la grandeur caractéristique du torse de l'utilisateur (26) est une posture du corps, une position du corps, une orientation du corps, une position des épaules et/ou une orientation des épaules de l'utilisateur (26), ou
le geste caractéristique d'une main (32) et/ou d'au moins un doigt de l'utilisateur (26), tel qu'un passage, un rapprochement, un éloignement, un écartement de doigts, une courbure de doigts, un contact de doigts et/ou une formation de poing, et/ou une position de doigts et/ou de main (32) et/ou une orientation de doigts et/ou de main (32), ou
le geste caractéristique de la bouche de l'utilisateur (26) comprend un mouvement des lèvres.

4. Procédé selon la revendication 3, dans lequel
la grandeur caractéristique pour le torse de l'utilisateur (26) est l'orientation du corps, et
la grandeur caractéristique de la main (32) de l'utilisateur est le geste.

5. Procédé selon l'une quelconque des revendications précédentes, dans lequel
pour détecter le premier, le deuxième et/ou le troisième traitement d'entrée sans contact, on utilise au moins une caméra de profondeur (12, 16), notamment une caméra à temps de vol.

6. Procédé selon l'une quelconque des revendications précédentes, dans lequel
on utilise en tant que surfaces d'affichage (36, 38) des moniteurs et/ou des surfaces de projection et/ou des affichages tête haute et/ou des affichages OLED flexibles et/ou des affichages à cristaux liquides et/ou des tissus techniques lumineux et/ou des films techniques lumineux.

7. Procédé selon l'une quelconque des revendications précédentes, dans lequel
on utilise des surfaces d'affichage (36, 38) qui sont agencées dans un tableau de bord (14) et/ou sur un pare-brise (18) et/ou dans une garniture de toit (22) et/ou dans une console centrale et/ou dans un autre élément d'habillage intérieur du véhicule automobile (10).

8. Procédé selon l'une quelconque des revendications précédentes, dans lequel
l'au moins un élément d'affichage (40, 42, 44) est une icône et/ou un élément de menu et/ou un contenu total de la première surface d'affichage (36) et/ou une zone partielle sélectionnée de la première surface d'affichage (36).

9. Procédé selon l'une quelconque des revendications précédentes, dans lequel
une activité cérébrale de l'utilisateur (26) est détectée en tant qu'autre traitement d'entrée sans contact.

10. Procédé selon l'une quelconque des revendications précédentes, dans lequel
l'au moins un élément d'affichage (40) sur la première surface d'affichage (36) est sélectionné lorsque le premier et le deuxième traitement d'entrée sans contact sont détectés dans une première période de temps, et/ou
l'au moins un élément d'affichage sélectionné (40) est déplacé de la première surface d'affichage (36) à l'intérieur de la première surface d'affichage (36) ou sur une deuxième surface d'affichage (38) lorsque le premier et/ou le deuxième traitement d'entrée sans contact et le troisième traitement d'entrée sans contact sont détectés dans une deuxième période de temps.

11. Procédé selon l'une quelconque des revendications précédentes, dans lequel
le déplacement est annulé par un quatrième traitement d'entrée sans contact de l'utilisateur (26), qui est de préférence différent des premier, deuxième et troisième traitements d'entrée sans contact de l'utilisateur (26), ou par l'actionnement d'un appareil d'entrée, notamment comprenant un écran tactile.

12. Procédé selon l'une quelconque des revendications précédentes, dans lequel
lors du déplacement de l'au moins un élément d'affichage (40), celui-ci est agrandi et/ou une information supplémentaire concernant l'au moins un élément d'affichage (40) est affichée et/ou on passe à un sous-menu concernant l'au moins un élément d'affichage (40).

13. Procédé selon l'une quelconque des revendications 1 à 11, dans lequel
lors du déplacement de l'au moins un élément d'affichage (40), celui-ci est réduit et/ou moins d'informations sont affichées concernant l'au moins un élément d'affichage (40) et/ou l'au moins un élément d'affichage (40) passe hors de la direction de vision de l'utilisateur (26) et/ou dans un arrière-plan.

14. Véhicule automobile (10) avec un dispositif d'affichage (34) avec une pluralité de surfaces d'affichage (36, 38), trois caméras différentes pour la détection de premier, deuxième et troisième traitements d'entrée sans contact et un appareil de commande qui est configuré pour mettre en oeuvre un procédé selon l'une quelconque des revendications précédentes.
